**Europäisches Patentamt**

(19) **European Patent Office**

**Office européen des brevets**

(11) Publication number : **0 370 537 B1**

(12) **EUROPEAN PATENT SPECIFICATION**

(45) Date of publication of patent specification :
20.05.92 Bulletin 92/21

(51) Int. Cl.⁵ : **A22C 17/14, A22C 21/00**

(21) Application number : **89202307.8**

(22) Date of filing : **12.09.89**

(54) **Method and apparatus for separating the heart and the lungs of a heart-lungs package of poultry.**

(30) Priority : **15.11.88 NL 8802815**

(43) Date of publication of application :
30.05.90 Bulletin 90/22

(45) Publication of the grant of the patent :
20.05.92 Bulletin 92/21

(84) Designated Contracting States :
**AT BE CH DE ES FR GB GR IT LI LU NL SE**

(56) References cited :
GB-A- 2 004 175
NL-A- 8 502 784
US-A- 3 653 918
US-A- 3 760 457

(56) References cited :
US-A- 3 930 282
US-A- 3 930 283
US-A- 4 524 491
US-A- 4 590 643

(73) Proprietor : **MACHINEFABRIEK MEYN B.V.**
**Noordeinde 68**
**NL-1511 AE Oostzaan (NL)**

(72) Inventor : **Meyn, Cornelis**
**Haal 62**
**NL-1511 AS Oostzaan (NL)**

(74) Representative : **de Vries, Johannes Hendrik**
**Fokke et al**
**Octrooibureau Los en Stigter B.V. P.O. Box**
**20052**
**NL-1000 HB Amsterdam (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 370 537 B1

## Description

The invention relates to a method for separating the heart and the lungs of a heart-lungs package of poultry.

The heart of poultry is suitable for human consumption whereas lungs are part of the so called garbage being used in animal feed. Therefore it is important that the heart and the lungs of a heart-lungs package of poultry are separated from each other. According to the known method this happens manually, being labour intensive, thus expensive, and leading to a low productivity.

It is an object of the invention to provide a method of this kind not having these disadvantages.

Therefore the method according to the invention is characterized in that firstly the muscle tissue interconnecting the heart and the lungs is removed from the heart-lungs package whereafter the heart and the lungs loosened therefrom are discharged via separate ways.

The method according to the invention can in an effective way be carried out automatically, thus increasing the productivity and lowering the costs.

According to a preferred embodiment of the method according to the invention discharging the heart and lungs via separate ways occurs in a water basin based on their different specific weights, whereby the lungs float on the water whereas the heart sinks. It appeared that the specific weight of the lungs is lower than the specific weight of water, so the lungs will float. The heart however has a specific weight that is higher than the specific weight of water, so the heart will sink. Like this a separation between the lungs and the hearts will occur which thereafter can be discharged separately.

The invention also relates to an apparates for carrying out the method according to the invention. According to the invention this apparatus is characterized by two parallel rolls lying closely together for removing the muscle tissue from the heart-lungs package said rolls rotating towards each other and having such a toothing that they propel the heart-lungs package to be processed in their longitudinal direction and a means for dincharging the loosened heart and the loosened lungs via separate ways. Whith the help of the two rolls the muscle tissue is seized and drawn between these two rolls and thus removed from the heart-lungs package. Thereafter the heart and the lungs remain loosened from each other on the rolls and are propelled thereby towards the discharge end.

According to a preferred embodiment of the apparatus according to the invention the means for discharging the loosened heart and the loosened lungs via separate ways comprises a water basin joining the discharge end of the means for removing the muscle tissue. With the aid of this water basin separating the loosened lungs and heart can occur in the way described before.

It is advantageous if means are provided for discharging the lungs floating on the water and means for discharging the bunk hearts. Moreover it is possible, that the discharge means for the floating lungs comprise a blower positioned next to the water basin and directed towards a discharge. By means of this blower the lungs are blown towards said discharge and can be led away through this discharge.

Moreover it is handy if the discharge means for the floating lungs comprise a conveyor screw extending upwards from the bottom of the water basin. At the discharge end of this conveyor screw the hearts can then be collected.

It is preferred if at the feeding end of the rolls a dosage plate is provided that ends at a short distance above these rolls. As a result a large amount of heart-lungs packages can be supplied all at once at the feeding end of the rolls, whereby the dosage plate ensures that these packages are processed by the rolls one by one.

In such a case it is further advantageous if above said rolls, ending at a short distance above these rolls, at least one obstruction means is provided for temporarily obstructing the heart-lungs package, said obstruction means having a lowermost end that is pivotable into the propelling direction of the rolls against a force, such as a spring force. These obstruction means prevent that the heart-lungs packages are only propelled by the rolls without these rolls effectively seizing the muscle tissue.

Hereafter the invention will be elucidated by means of the drawing in which an embodiment of the apparatus according to the invention is illustrated.

Fig. 1 shows schematically and in a side elevational view part of an embodiment of the apparatus according to the invention, and

fig. 2 shows the apparatus according to fig. 1 in a top plan view.

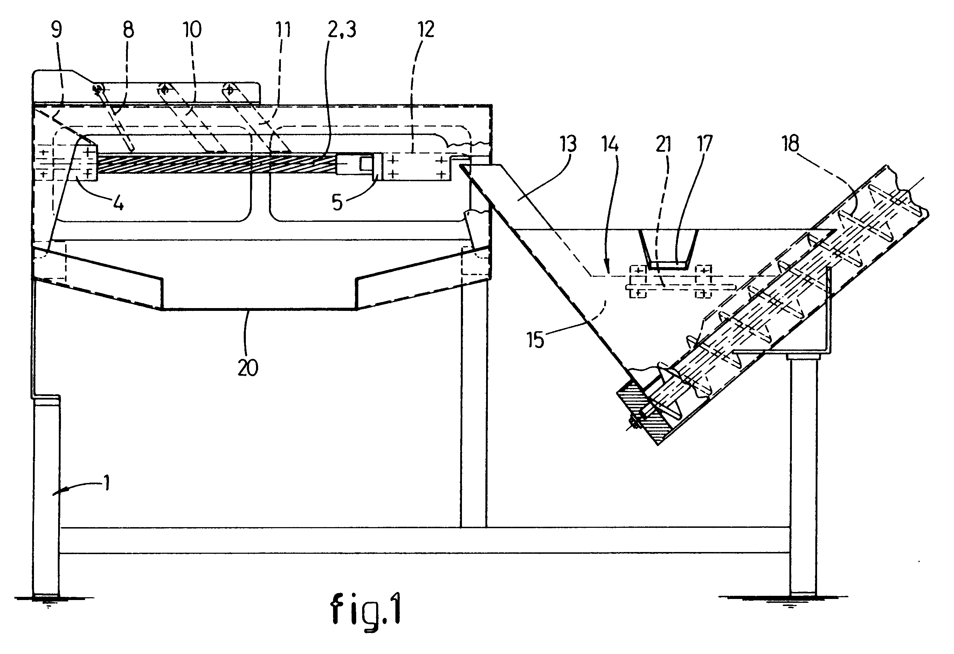

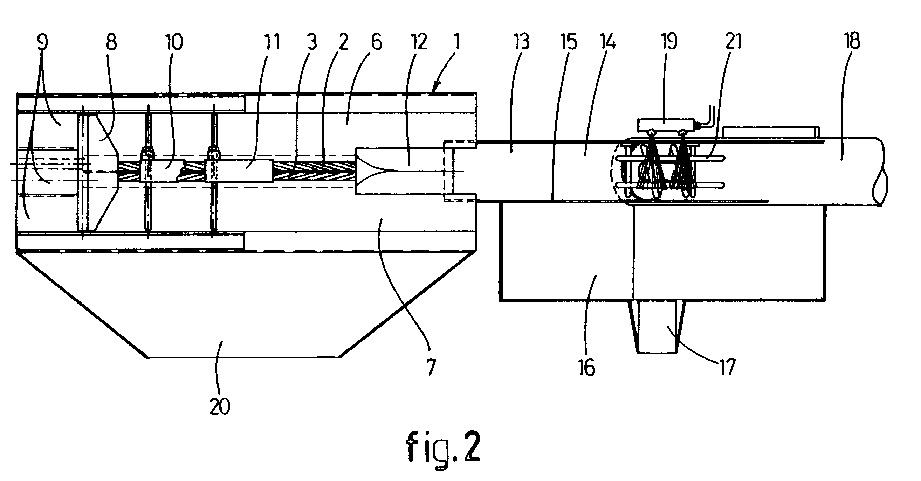

The apparatus shown in fig. 1 and fig. 2 has a frame 1 onto which the different parts of the apparatus are mounted. Among others these are firstly two parallel rolls 2, 3 lying closely together and that in a way known per se are mounted in the frame 1 by means of mounting blocks 4, 5. The rolls 2, 3 each are provided with a helically extending toothing, whereby the toothing of both rolls extends in an opposite sense.

The rolls 2, 3 are driven by a not illustrated driving means, such that they rotate towards each other as seen from their upper side. As a result of this direction of rotation and the helically extending toothing as represented in the figs. the products lying on these rolls 2, 3 are propelled from the left handed side to the right handed side as seen in figs 1 and 2.

From the upper plane of the rolls 2, 3 guide plates 6, 7 extend laterally upwards and guarantee that the products to be processed are always located near to the rolls 2, 3.

At the feeding end of the rolls 2, 3 a dosage plate 8 is provided ending at a short distance above these rolls. Products feeded onto the rolls 2, 3 via a supply guide 9 are dosed by means of this dosage plate 8, that means propelled one by one by the rolls 2, 3.

The dosage plate 8 is mounted onto the frame 1. Mounted onto the frame 1 too are two obstruction means 10 and 11 ending at a short distance above these rolls 2, 3. These obstruction means 10 and 11 can rotate around their uppermost ends into the propelling direction of these rolls 2, 3. This rotation can occur against an opposite force, such as a spring force or the gravitational force acting on the obstruction means 10 and 11. An abutment means, not shown, can guarantee that these obstruction means 10 and 11 just do not contact the rolls 2 and 3 in their rest position.

The function of the obstruction means 10 and 11 is to prevent that products present on the rolls 2 and 3 are only propelled by these rolls 2 and 3 without these rolls 2 and 3 effectively processing these products. By means of the obstruction means 10 and 11 care has been taken that the rolls 2 and 3 effectively seize the products to be processed.

A horizontal guide plate 12 joins the discharge end of the rolls 2 and 3 and receives the products. This discharge plate 12 then changes into a downward chute 13 ending in a water basin 14.

Aside this water basin 14, separated therefrom by a lowered wall section 15, a collection reservoir 16 with discharge 17 is provided.

A conveyor screw 18 extends inclined upwards from the bottom of the water basin 14 and leads to a discharge not discussed in detail.

Further aside of the water basin 14 a blower 19 is positioned providing an air stream along the surface of the water in the water basin 14 directed towards the wall portion 15. The upper edge of the wall portion 15 then will act as an overflow. Further the figs. show a protection grid 21 preventing that a person could be caught up in the conveyor screw 18 with its hands.

The shown apparatus operates as follows:
Heart-lungs packages of poultry are supplied to the rolls 2, 3 via de supply guide 9. The dosage plate 8 guarantees that these heart-lungs packages are taken along one by one by the rolls 2, 3.

The heart and the lungs of such a heart-lungs package are interconnected by a muscle tissue.

As a result of the action of the obstruction means 10 and 11 this muscle tissue is contacted with the toothing of the rolls 2, 3 whereafter this muscle tissue is pulled away from the heart and the lungs and is discharged downwards through the rolls 2, 3 towards a discharge plate 20. The heart and the lungs rest loosened from each other on the rolls 2, 3 and are supplied thereby to the guide plate 12 that then presents the heart and the lungs to the chute 13.

Via the chute 13 the heart and the lungs reach the water basin 14 being filled with water and of which the water level corresponds with the upper edge of the wall portion 15. The specific weight of the hearts is such that these immediately sink in the water basin 14 and are received by the conveyor screw 18 and are discharged thereby.

The lungs however have a lower specific weight and will float. The air stream discharged by the blower 19 blows the lungs over the upper edge of the wall portion 15 into the collection reservoir 16 from which the lungs can be collected through the discharge 17.

The invention is not limited to the embodiment described before which can be varied widely within the scope of the invention as defined by the claims.

## Claims

1. Method for separating the heart and the lungs of a heart-lungs package of poultry, characterized in that firstly the muscle tissue interconnecting the heart and the lungs is removed from the heart-lungs package whereafter the heart and the lungs loosened therefrom are discharged via separate ways.

2. Method according to claim 1, characterized in that discharging the heart and lungs via separate ways occurs in a water basin (14) based on their different specific weights, whereby the lungs float on the water whereas the heart sinks.

3. Apparatus for carrying out the method according to claim 1 or 2, characterized by two parallel rolls (2, 3) lying closely together for removing the muscle tissue from the heart-lungs package said rolls rotating toward each other and having such a toothing that they propel the heart-lungs package to be processed in their longitudinal direction and a means (14) for discharging the loosened heart and the loosened lungs via separate ways.

4. Apparatus according to claim 3, characterized in that the means for discharging the loosened heart and the loosened lungs via separate ways comprises a water basin (14) joining the discharge end of the means (2, 3) for removing the muscle tissue.

5. Apparatus according to claim 4, characterized by means (19) for discharging the lungs floating on the water and means (18) for discharging the sunk hearts.

6. Apparatus according to claim 5, characterized in that the discharge means for the floating lungs comprise a blower (19) positioned next to the water basin (14) and directed towards a discharge (17).

7. Apparatus according to claim 5 or 6, characterized in that the discharge means for the sunk hearts comprise a conveyor screw (18) extending upwards from the bottom of the water basin (14).

8. Apparatus according to one of the claims 3-7, characterized in that at the feeding end of the rolls (2, 3) a dosage plate (8) is provided that end at a short distance above these rolls.

9. Apparatus according to one of the claims 3-8), characterized in that above said rolls (2, 3), ending at a short distance above these rolls, at least one obstruction means (10; 11) is provided for temporarily obstructing the heart-lungs package, said obstruction means (10; 11) having a lowermost end that is pivotable into the propelling direction of the rolls against a force, such as a spring force.

**Patentansprüche**

1. Verfahren zur Trennung von Herz und Lungen eines Herz-Lungen-Paketes von Geflügel, dadurch **gekennzeichnet**, daß zunächst das Muskelgewebe, welches das Herz und die Lungen miteinander verbindet, aus dem Herz-Lungen-Paket beseitigt wird und danach das davon gelöste Herz und die Lungen über getrennte Wege abgesondert werden.

2. Verfahren nach Anspruch 1, dadurch **gekennzeichnet**, daß die Absonderung von Herz und Lungen über getrennte Wege in einem Wasserbehälter (14) aufgrund ihrer unterschiedlichen spezifischen Gewichte erfolgt, wobei die Lungen auf dem Wasser schwimmen, während das Herz absinkt.

3. Vorrichtung zur Durchführung des Verfahrens nach Anspruch 1 oder 2, **gekennzeichnet** durch zwei parallele, dicht zusammenliegende Walzen (2,3) zum Beseitigen des Muskelgewebes des Herz-Lungen-Paketes, wobei die Walzen sich aufeinander zudrehen und eine derartige Verzahnung aufweisen, daß sie die Herz-Lungen-Pakete antreiben, um sie in ihrer Längsrichtung zu bearbeiten, und eine Einrichtung (14) zum Austragen des gelösten Herzens und der gelösten Lungen auf getrennten Wegen.

4. Vorrichtung nach Anspruch 3, dadurch **gekennzeichnet**, daß die Einrichtung zum Austragen des gelösten Herzens und der gelösten Lungen auf getrennten Wegen einen Wasserbehälter (14) aufweist, der mit dem Austragsende der das Muskelgewebe entfernenden Einrichtung (2,3) verbunden ist.

5. Vorrichtung nach Anspruch 4, **gekennzeichnet** durch ein Austragsmittel (19) für die auf dem Wasser schwimmenden Lungen und ein Austragsmittel (18) für die gesunkenen Herzen.

6. Vorrichtung nach Anspruch 5, dadurch **gekennzeichnet**, daß das Austragsmittel für die schwimmenden Lungen ein Gebläse (19) aufweist, das neben dem Wasserbehälter (14) angeordnet ist und auf einen Austrag (17) gerichtet ist.

7. Vorrichtung nach Anspruch 5 oder 6, dadurch **gekennzeichnet**, daß das Austragsmittel für die gesunkenen Herzen eine Transportschnecke (18) aufweist, die sich von der Sohle des Wasserbehälters (14) aufwärts erstreckt.

8. Vorrichtung nach einem der Ansprüche 3 bis 7, dadurch **gekennzeichnet**, daß an dem Eintragsende der Walzen (2,3) eine Dosierplatte (8) vorgesehen ist, die in einer geringen Entfernung über den Walzen endet.

9. Vorrichtung nach einem der Ansprüche 3 bis 8, dadurch **gekennzeichnet**, daß über den genannten Walzen (2,3) und in einer geringen Entfernung über den Walzen endend mindestens ein Rückhaltemlttel (10;11) zum zeitweiligen Zurückhalten der Herz-Lungen-Pakete vorgesehen ist, wobei die genannten Rückhaltemittel (10,11) ein unterstes Ende aufweisen, das in Antriebsrichtung der Walzen gegen eine Kraft, wie beispielsweise eine Federkraft, schwenkbar ist.

**Revendications**

1. Procédé pour séparer le coeur et les poumons d'un paquet coeur-poumons d'une volaille, caractérisé en ce qu'on retire tout d'abord le tissu musculaire reliant le coeur et les poumons du paquet coeur-poumons, à la suite de quoi on évacue le coeur des poumons de ce paquet, par des voies séparées.

2. Procédé selon la revendication 1, caractérisé en ce que le retrait du coeur et des poumons par des voies séparées s'effectue dans un bac rempli d'eau (14), sur la base de leurs poids spécifiques différents, les poumons flottant sur l'eau, tandis que le coeur tombe au fond.

3. Dispositif pour mettre en oeuvre le procédé selon la revendication 1 ou 2, caractérisé par deux rouleaux parallèles (2,3) très proches l'un de l'autre, pour retirer le tissu musculaire du paquet coeur-poumons, lesdits rouleaux tournant en direction l'un de l'autre et comportant une denture telle que ces rouleaux entraînent le paquet coeur-poumons devant être traité dans leur direction longitudinale, et des moyens (14) pour évacuer le coeur détaché et les poumons détachés, par des voies séparées.

4. Dispositif selon la revendication 3, caractérisé en ce que les moyens pour évacuer le coeur détaché et les poumons détachés par des voies séparées comprennent un bac rempli d'eau (14), qui est raccordé à l'extrémité de refoulement des moyens (2,3) servant à retirer le tissu musculaire.

5. Dispositif selon la revendication 4, caractérisé par des moyens (19) pour évacuer les poumons flottant sur l'eau, et des moyens (18) pour évacuer les coeurs tombés au fond.

6. Dispositif selon la revendication 5, caractérisé en ce que les moyens d'évacuation pour les poumons flottants comprennent un ventilateur (19) disposé à proximité direct du bac rempli d'eau (14) et tourné vers une sortie d'évacuation (17).

7. Dispositif selon la revendication 5 ou 6, caractérisé en ce que les moyens d'Qvacuation pour les coeurs tombés au fond comprend une vis convoyeuse (18) qui s'étend vers le haut à partir du fond du bac rempli d'eau (14).

8. Dispositif selon l'une des revendications 3-7, caractérisé en ce qu'à l'extrémité d'alimentation des rouleaux (2,3), il est prévu une plaque de dosage (8) qui se termine à une faible distance au-dessus de ces rouleaux.

9. Dispositif selon l'une des revendications 3-8, caractérisé en ce qu'au moins un moyen d'obstruction (10;11) est prévu au-dessus desdits rouleaux (2,3) et de manière à se terminer à une courte distance au-dessus de ces rouleaux, pour retenir temporairement le paquet coeur-poumons, l'extrémité la plus basse desdits moyens d'obstruction (10;11) pouvant pivoter dans la direction d'entrainement des rouleaux à l'encontre d'une force, comme par exemple la force d'un ressort.

fig.1

EP 0 370 537 B1

fig.2

EP 0 370 537 B1